# FASCICULE DE BREVET EUROPEEN

(11) **EP 3 537 082 B1**
(45) Date de publication et mention de la délivrance du brevet: **09.06.2021**
(21) Numéro de dépôt: 19161055.9
(22) Date de dépôt: 06.03.2019
(51) Int. Cl.: F28D 1/02, F28F 1/02, F24F 1/00, F24F 1/0029, F24F 1/0033

(54) **VENTILO-CONVECTEUR AVEC ECHANGEUR THERMIQUE ET REPARTITION DU DEBIT D'AIR OPTIMISES**
GEBLÄSEKONVEKTOR MIT WÄRMETAUSCHER UND OPTIMIERTER LUFTDURCHSATZVERTEILUNG
FAN COIL HEAT EXCHANGER WITH OPTIMISED AIR FLOW DISTRIBUTION

(30) Priorité: 09.03.2018 BE 201805145
(43) Date de publication de la demande: 11.09.2019
(73) Titulaire: Airlam srl, 5580 Rochefort (BE)
(72) Inventeur: DESCY, Gilbert-Gaëtan, 5580 HAN-SUR-LESSE (BE); DESCY, Alexandre, 5580 HAN-SUR-LESSE (BE)
(74) Mandataire: AWA Benelux

(56) Documents cités:
- WO-A1-2014/207434
- WO-A1-2016/170456
- WO-A1-2017/049089
- FR-A1- 2 774 458
- US-B2- 9 702 637

## Description

### Objet de l'invention

La présente invention se rapporte à un ventilo-convecteur dans lequel l'échange de chaleur est amélioré grâce à un échangeur thermique plus performant et une répartition d'air optimisée. Le ventilo-convecteur de la présente invention comprend un échangeur de chaleur à micro-canaux et ailettes à persiennes ou non.

### Etat de la technique

Les radiateurs ventilés, encore appelés ventilo-convecteurs, disponibles dans le commerce ont fait l'objet de peu d'améliorations ces dernières années. Ceux-ci possèdent généralement des échangeurs thermiques classiques à tubes et ailettes en cuivre et/ou en aluminium, offrant un échange de chaleur qui n'est pas optimisé.

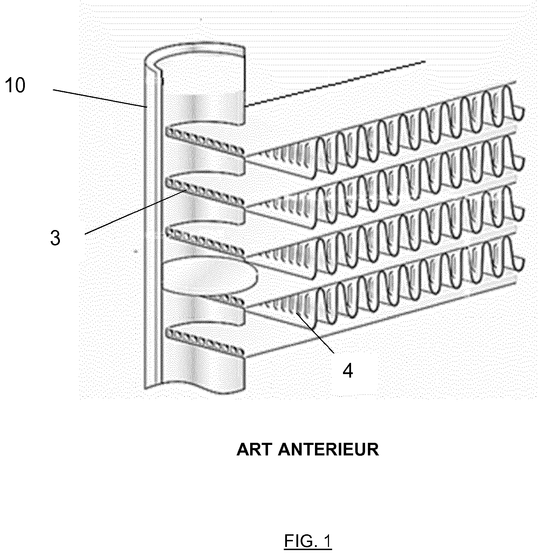

Pourtant, on connaît actuellement des échangeurs thermiques performants, composés de micro-canaux et d'ailettes avec ou sans persiennes, mais ceux-ci ne sont pas utilisés dans les ventilo-convecteurs et radiateurs domestiques. On les retrouve notamment dans les radiateurs de voiture, dans les climatiseurs, et autres éléments des techniques HVAC. Un exemple de ce type d'échangeur de chaleur à micro-canaux et ailettes (avec persiennes) connu en soi de l'état de la technique est représenté sur la figure 1.

Le document US 8,739,855 B2 divulgue un échangeur de chaleur comprenant des micro-canaux et des ailettes à persiennes. Cet échangeur de chaleur est apte à être placé dans un présentoir réfrigérant, mais il n'est pas adapté pour les ventilo-convecteurs.

Les documents CN203704453U et US 7,640,970 décrivent tous deux un évaporateur d'un climatiseur domestique comprenant des micro-canaux et des ailettes.

Le document US 2010/0011804 A1 divulgue également un échangeur de chaleur à micro-canaux avec des ailettes disposées entre les rangées de micro-canaux pour les systèmes réfrigérants.

Le document WO 2016/170456 A1 divulgue une unité de diffusion pour la climatisation d'été et/ou d'hiver d'environnements intérieurs comprenant un châssis adapté au montage sur un mur ; une structure monocoque adaptée pour être fixée audit châssis, ladite structure monocoque étant entièrement constituée de polystyrène ou d'un matériau équivalent ; un échangeur de chaleur apte à être supporté par ladite structure monocoque et entouré par celle-ci sans zone de dispersion de chaleur vers l'extérieur, ledit échangeur étant un échangeur à micro-canaux utilisant de l'eau ; des moyens de ventilation et des moyens de filtrage ; et une structure de protection et de recouvrement externe pourvue à l'avant avec un réseau de trous pour la diffusion d'air conditionné.

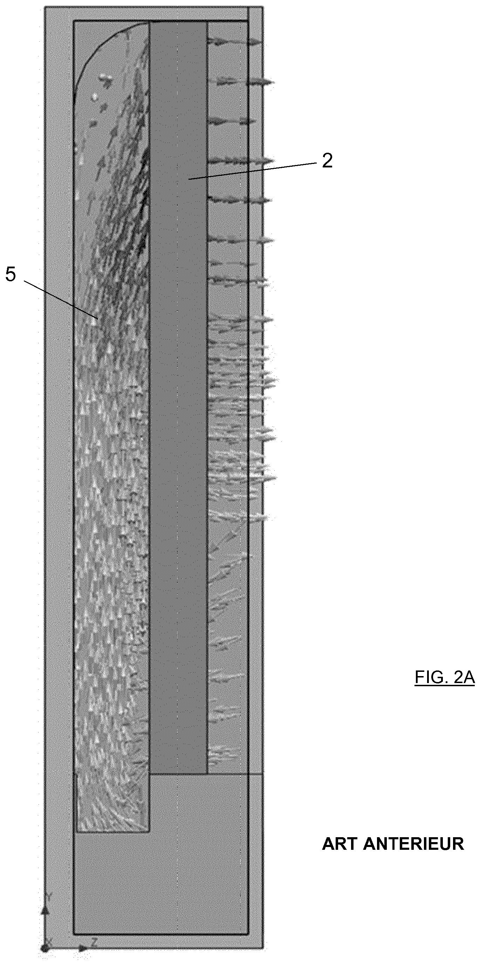

Le design du plénum d'entrée d'air (conduit aéraulique) est essentiel afin d'avoir une bonne répartition de l'air à la surface d'entrée de l'échangeur. En effet, si l'échangeur de chaleur n'est pas traversé sur la plus grande portion possible de sa surface d'entrée par l'air provenant des ventilateurs la puissance du ventilo-convecteur en sera pénalisée. Dans le cas du plénum ayant une forme de base très simple avec un ventilateur tangentiel à moteur central comme par exemple représenté dans WO 2016/170456 A1, le flux d'air se sépare en deux dans le conduit aéraulique et n'est donc pas réparti correctement ; il y a même des zones qui sont traversées par un débit d'air quasi nul. De plus, on observe qu'un phénomène d'aspiration dans la section inférieure du ventilo-convecteur peut se produire et risque de créer une boucle d'air réduisant encore la puissance et l'efficacité du système (voir figure 2A).

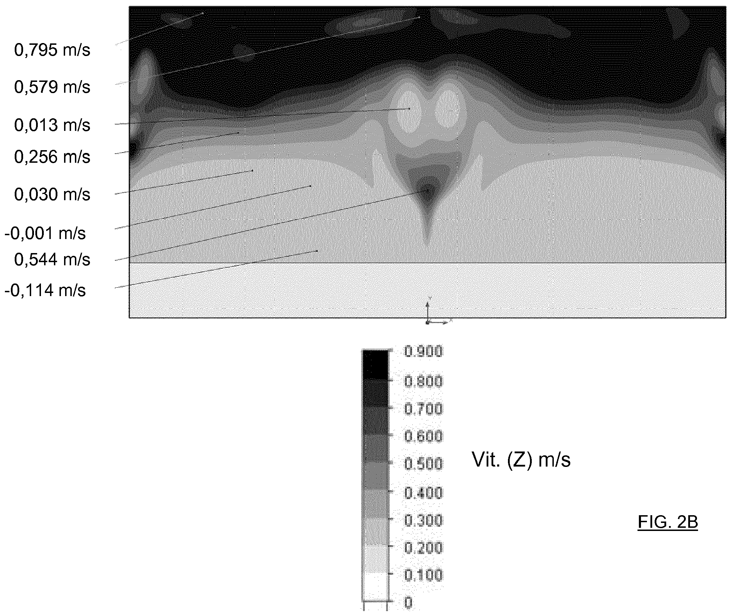

La figure 2B montre la répartition de la composante normale de la vitesse sur la surface d'entrée de cet échangeur. Cela permet d'observer si l'échangeur est bien traversé ou pas par le débit d'air provenant du ventilateur. On constate ici que le premier tiers supérieur est traversé en totalité par le débit d'air très rapide. Dès le second tiers, cette répartition se détériore et enfin on observe un débit très faible voire négatif sur le tiers inférieur.

La figure 2B montre également que l'utilisation d'un ventilateur dont le moteur se trouve au milieu pénalise la répartition du débit au centre de l'image.

On a de plus indiqué sur la figure 2B quelques valeurs de la composante normale de la vitesse à l'entrée de l'échangeur. On observe bien une aspiration de l'air dans la zone inférieure (-0.001 m/s, -0.114m/s) alors qu'idéalement l'air devrait être également expulsé dans cette zone.

De plus, le ventilateur de type tangentiel utilisé dans WO 2016/170456 A1 a le désavantage d'être bruyant, de consommer plus d'énergie que les ventilateurs axiaux, pour un même débit d'air et de présenter des paliers de rotor très fragiles qui peuvent se casser en cours d'utilisation.

Le document FR 2 774 458 A1 divulgue un émetteur réversible d'air chaud ou froid, comprenant une cheminée de tirage ouverte en bas et en haut pour l'entrée et la sortie d'air, un échangeur de chaleur et une batterie de ventilateurs axiaux, assez silencieux, qui ne sont mis en marche que quand l'air est refroidi, car l'air refroidi est plus difficile à évacuer.

### Buts de l'invention

La présente invention vise à fournir une solution permettant d'améliorer la performance des ventilo-convecteurs, entre autres grâce à une augmentation de la surface d'échange de l'échangeur thermique.

Un autre but poursuivi par l'invention est de fournir une solution permettant un débit d'air le plus uniforme possible sur l'ensemble de la surface d'entrée de l'échangeur thermique.

Un autre but encore poursuivi par l'invention est de fournir un dispositif pouvant être utilisé à basse température (par exemple à 30°C) rendant le produit adapté à la distribution de la chaleur produite par des pompes à chaleur.

Un autre but de l'invention est de fournir un ventilo-convecteur à inertie thermique très faible, ce qui permet d'obtenir un temps de réponse extrêmement court, idéalement de l'ordre de la minute.

### Principaux éléments caractéristiques de l'invention

La présente invention se rapporte à un ventilo-convecteur comprenant :
- une entrée et une sortie de fluide caloporteur ;
- un échangeur de chaleur disposé essentiellement verticalement en utilisation, connecté à l'entrée et à la sortie de fluide caloporteur, dont la plus grande surface largeur x hauteur correspond à la partie frontale du ventilo-convecteur, ladite partie frontale en sortie étant en contact avec l'environnement ambiant, ledit échangeur de chaleur comprenant un collecteur de fluide chaud, un collecteur de fluide froid et une pluralité de micro-canaux localisés entre lesdits collecteurs et permettant la circulation du collecteur de fluide chaud vers le collecteur de fluide froid, lesdits micro-canaux étant agencés en rangées reliées entre elles par un ensemble d'ailettes ;
- un conduit aéraulique ou plénum d'alimentation en air ambiant situé derrière l'échangeur de chaleur, formant une cavité arrangée de manière à assurer un flux d'air de bas en haut le plus uniforme possible en sortie de l'échangeur de chaleur ;
- au moins un ventilateur localisé à la base du ventilo-convecteur sous le plénum d'alimentation en air ambiant ;
caractérisé en ce que le ventilo-convecteur comprend une pluralité de ventilateurs axiaux répartis à la même hauteur sur toute la largeur du ventilo-convecteur, afin de permettre la circulation de l'air ambiant dans le plénum et ensuite à travers l'échangeur de chaleur vers l'extérieur, par la partie frontale du ventilo-convecteur et en ce que le plénum d'alimentation en air ambiant possède une section qui va en se rétrécissant de manière linéaire depuis sa partie proximale des ventilateurs vers sa partie distale des ventilateurs, ainsi qu'une largeur constante.

Selon des formes d'exécution préférées de l'invention, le ventilo-convecteur comprend en outre une des caractéristiques suivantes, ou une combinaison appropriée de celles-ci :
- le rapport de ladite section proximale à ladite section distale est compris entre 1,3 et 3 ;
- le nombre de ventilateurs est compris entre 7 et 11 ;
- le plénum comporte une chicane entre les ventilateurs et la section qui va en se rétrécissant, configurée pour que le rapport entre la section d'entrée et la section de sortie de la chicane soit compris entre 0,35 et 0,45 ;
- les micro-canaux de l'échangeur de chaleur sont disposés en tubes parallèles aplatis reliés entre eux par les ailettes ;
- le nombre de micro-canaux par tube est compris entre 2 et 15 et la largeur des tubes de micro-canaux est comprise entre 15 et 50 mm ;
- les ailettes sont sous la forme d'une tôle continue et ondulée, disposée de manière à permettre le passage frontal de l'air dans l'échangeur de chaleur ;
- les ailettes sont des ailettes à persiennes, perforées, à bandes décalées, rectangulaires, triangulaires, droites ou ondulées ;
- le fluide caloporteur est de l'eau ou une solution aqueuse ;
- le ventilo-convecteur comprend une plaque de parachèvement située contre la face avant de l'échangeur de chaleur et perforée pour permettre le passage de l'air sortant ;
- le ventilo-convecteur comprend une électronique de mesure et contrôle, pour communiquer par internet les données de production à un utilisateur.

### Brève description des figures

La figure 1 représente un exemple d'échangeur thermique à micro-canaux et ailettes (dans ce cas-ci avec persiennes) selon l'état de la technique.
La figure 2A représente une vue en coupe d'une simulation d'écoulement d'air dans un ventilo-convecteur basique selon l'état de la technique et la figure 2B représente le plan de visualisation de la composante normale de la vitesse à la surface d'entrée de l'échangeur pour le ventilo-convecteur de base de la figure 2A.
La figure 3A représente une vue en perspective du ventilo-convecteur avec son couvercle frontal selon la présente invention et la figure 3B représente une vue de l'intérieur du ventilo-convecteur.
La figure 4 représente une vue en coupe du ventilo-convecteur selon la figure 3A.
La figure 5 représente, de manière similaire à la figure 2, une répartition du flux d'air dans le conduit aéraulique du ventilo-convecteur selon l'invention.
La figure 6 représente une géométrie de plénum pour une répartition optimisée de l'air entrant dans l'échangeur du ventilo-convecteur selon une forme d'exécution de l'invention.
La figure 7 est un graphique illustrant la puissance du ventilo-convecteur de la présente invention en fonction de la température d'alimentation en eau chaude. Ces mesures ont été réalisées en faisant varier le débit d'eau de circulation.

### Description d'une forme d'exécution préférée de l'invention

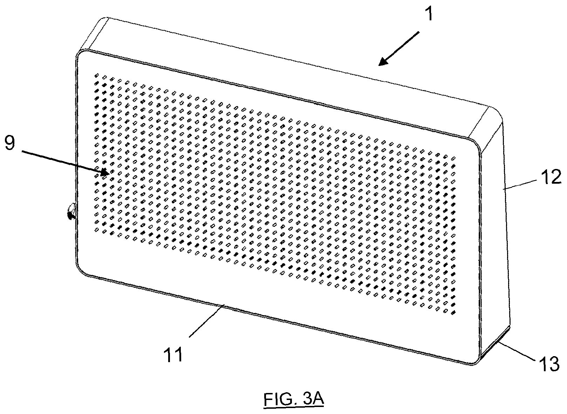

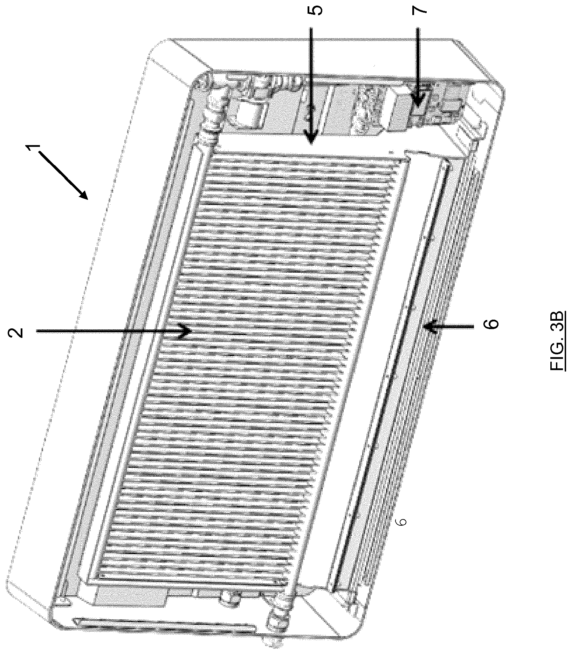

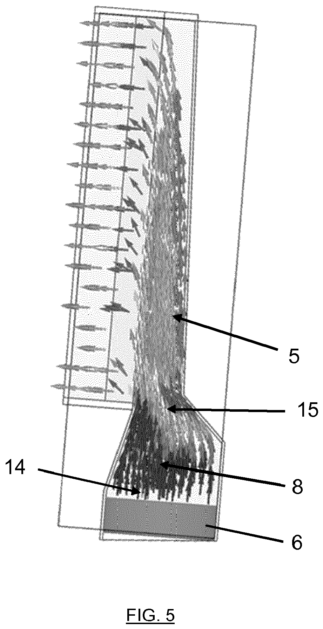

Une forme d'exécution du ventilo-convecteur 1 préconisé par la présente invention est représentée sur les figures 3 à 6. Le ventilo-convecteur possède une largeur 11, une hauteur 12 et une profondeur 13. La profondeur 13 est beaucoup plus faible que la largeur 11 et la hauteur 12, le rapport de ces deux dernières grandeurs pouvant être variable pour des raisons pratiques ou esthétiques (par exemple pour s'adapter au mobilier existant ou à l'espace disponible). Le ventilo-convecteur 1 comprend un échangeur de chaleur 2 à micro-canaux 3 disposés en plaques parallèles et à ailettes 4, préférentiellement de type persiennes, agencé de manière à ce que sa plus grande surface, c'est-à-dire la surface largeur 11 x hauteur 12, corresponde à la face frontale du ventilo-convecteur 1, qui fournit l'air réchauffé dans le volume ambiant. La face de sortie de l'échangeur de chaleur est recouverte par une plaque ou un capot de parachèvement 9 qui est par exemple une plaque perforée. Une cavité est prévue à l'arrière de l'échangeur de chaleur 2, préférentiellement sur toute la hauteur de celui-ci, formant un conduit aéraulique ou « plénum » 5. Une pluralité de ventilateurs 6 localisés à l'entrée du plénum 5, et alignés sur toute la largeur 11 du ventilo-convecteur 1, permet de faire circuler l'air dans le ventilo-convecteur 1. L'air est entraîné grâce aux ventilateurs 6 alignés sous le ventilo-convecteur 1 pour ensuite être amené dans le plénum 5 de manière à être réparti à l'arrière de l'échangeur de chaleur 2 et sur toute la surface de celui-ci. De cette manière, l'air traverse l'échangeur de chaleur 2 de la manière la plus uniforme possible, tel qu'illustré à la figure 5.

L'échangeur de chaleur 2 selon l'invention comprend un collecteur d'eau froide et un collecteur d'eau chaude (non représentés). Des micro-canaux 3 forment un circuit entre ces deux collecteurs afin de faire circuler l'eau du collecteur d'eau chaude vers le collecteur d'eau froide. Entre les rangées de micro-canaux 3, se présentant sous forme de tubes aplatis, sont agencés des ailettes de préférence à persiennes 4. Préférentiellement, le nombre de micro-canaux par tube (ou plaque) est compris entre 2 et 15 et la largeur des tubes est comprises entre 15 et 50mm. Les échangeurs 2 à micro-canaux 3 et à ailettes à persiennes 4 permettent une augmentation importante de la surface d'échange de l'échangeur thermique 2 ce qui mène à une performance accrue du ventilo-convecteur 1.

Par ailleurs, le plénum 5 a été configuré et dimensionné de manière à offrir un débit d'air le plus uniforme possible sur l'ensemble de la surface d'entrée de l'échangeur thermique. Aussi, de préférence, le plénum possède une largeur constante et une section qui va en se rétrécissant de manière linéaire depuis sa partie proximale des ventilateurs vers sa partie distale des ventilateurs. De préférence, le rapport de la section proximale à la section distale est compris entre 1,3 et 3.

Avantageusement, le plénum 5 est pourvu à sa base d'une chicane 8 se trouvant à la sortie des ventilateurs 6. Afin d'avoir une répartition optimale du débit d'air, une géométrie particulière de plénum a été recherchée par CFD (Computational Fluid Dynamics).

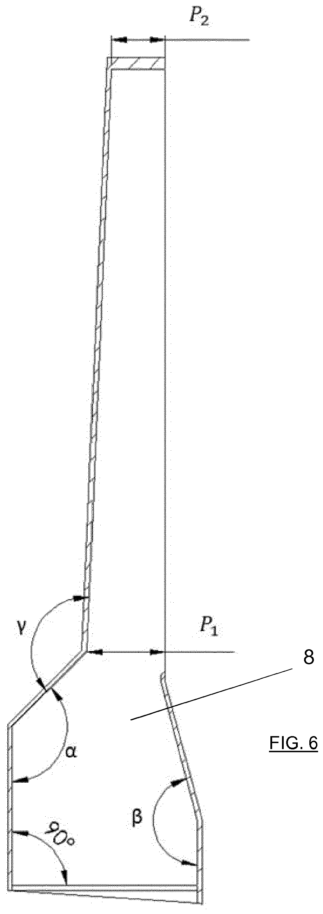

Selon une forme particulière de l'invention représentée sur la figure 6, les angles α, β et γ au niveau de la chicane 8 ainsi que les valeurs de profondeur *P*₁ et *P*₂ ont été fixés après de nombreux essais par CFD (a est compris entre 130° et 140° , β est compris entre 160° et 170° ; rapport entre la section de sortie 15 et la section d'entrée 14 de la chicane 8 compris entre 0,35 et 0,45). Dans la zone entre *P*₁ et *P*₂ le plénum se rétrécit de manière linéaire. La conjugaison de ces paramètres judicieusement choisis permet avantageusement de contraindre le débit d'air à traverser toute la surface de l'échangeur et à ne pas se concentrer uniquement sur la partie haute, comme dans l'art antérieur précité.

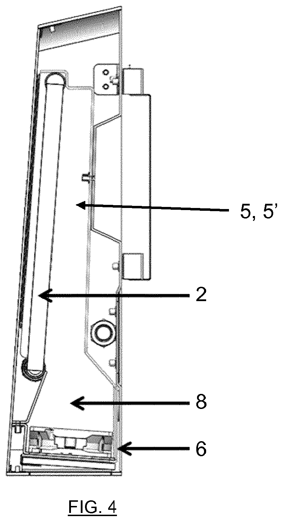

La répartition du débit est aussi améliorée grâce au positionnement de l'ensemble des ventilateurs 6 localisés sous l'entrée du plénum 5, et alignés sur la longueur totale du ventilo-convecteur 1, comme illustré par les figures 4 et 5. De cette manière, les performances du radiateur ventilé sont nettement améliorées. Les ventilateurs 6 sont par exemple au nombre de 7, voire 9 ou 11 pour les modèles de puissance supérieure qui par exemple garderont la même hauteur 12 et auront une largeur 11 augmentée.

Avantageusement, le ventilo-convecteur 1 selon l'invention est pourvu d'une électronique de mesure et contrôle 7, qui permet par exemple de communiquer par internet les données de production à un utilisateur, et par conséquent d'adapter/d'optimiser si nécessaire cette consommation en fonction des besoins et du comportement de l'utilisateur. Ce système de mesure de l'énergie consommée est par exemple constitué d'un calorimètre comportant un débitmètre et deux sondes de température mesurant la différence en entrée et sortie d'alimentation en eau.

Des mesures réalisées par les inventeurs prouvent l'amélioration des performances du ventilo-convecteur par rapport à l'état de la technique. Les puissances fournies par l'appareil de l'invention et par un équipement vendu sur le marché ont été comparées, dans des conditions identiques de fonctionnement. Le produit selon l'invention fournit 60% de puissance de plus que l'appareil commercial lors de tests effectués en parallèle et dans les conditions identiques : débit d'eau, température d'alimentation en eau chaude et température d'air ambiant à chauffer. Le critère de comparaison était la puissance fournie par les deux produits divisée par la surface frontale d'occupation de ce produit dans sa mise en place murale.

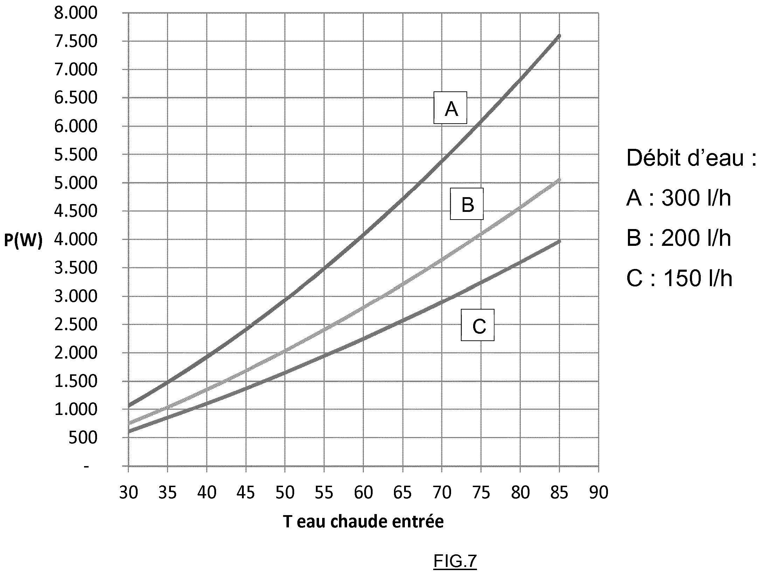

Des mesures de puissance du ventilo-convecteur de la présente invention en fonction de la température d'alimentation en eau chaude du ventilo-convecteur sont représentées à la figure 7. Ces mesures ont été réalisées en faisant varier le débit d'eau de circulation. On a constaté que le dispositif de l'invention peut être utilisé avantageusement à basse température car le produit est capable de fournir de la puissance calorifique dans une gamme de température d'entrée d'eau chaude allant de 30°C à 90°C. Par exemple, une puissance de 1.500 W peut être fournie avec de l'eau à basse température de 35°C avec un débit d'eau de 300 l/heure. Cette aptitude rend le ventilo-convecteur de l'invention particulièrement adapté à la distribution de la chaleur produite par des pompes à chaleur.

Par ailleurs, l'inertie thermique du ventilo-convecteur de l'invention est très faible et le temps de réponse est extrêmement court, de l'ordre de la minute. Il est plus intéressant que le chauffage par le sol vu sa faible inertie thermique et un temps de réponse très court par rapport à une demande de fourniture de chaleur, principalement pour les bâtiments à faible consommation énergétique.

Ces caractéristiques permettent de concevoir et de fabriquer des ventilo-convecteurs dont la puissance de transfert est importante comparé à l'impact qu'ils ont en termes d'occupation sur sol et murs d'habitation. A titre d'exemple, le ventilo-convecteur selon l'invention avec une surface frontale de 0,325 m² permet de fournir une puissance de 1000 W avec de l'eau à 40°C en entrée d'alimentation.

Un avantage complémentaire de ce produit est son poids réduit qui permet la manutention et la mise en place par une seule personne.

### Liste des symboles de référence

- 1.: Ventilo-convecteur
- 2.: Echangeur de chaleur
- 3.: Plaque de micro-canaux
- 4.: Ailettes à persiennes
- 5.: Plénum / conduit aéraulique
- 5': Section du plénum
- 6.: Ventilateur(s)
- 7.: Electronique de mesure et contrôle
- 8.: Base du plénum (chicane)
- 9.: Capot de parachèvement frontal
- 10.: Collecteur
- 11.: Largeur
- 12.: Hauteur
- 13.: Profondeur
- 14.: Section d'entrée de la chicane
- 15.: Section de sortie de la chicane

## Revendications

1. Ventilo-convecteur (1) comprenant :
- une entrée et une sortie de fluide caloporteur ;
- un échangeur de chaleur (2) disposé essentiellement verticalement en utilisation, connecté à l'entrée et à la sortie de fluide caloporteur, dont la plus grande surface largeur (11) x hauteur (12) correspond à la partie frontale du ventilo-convecteur (1), ledit échangeur de chaleur comprenant un collecteur de fluide chaud, un collecteur de fluide froid et une pluralité de micro-canaux (3) localisés entre lesdits collecteurs et permettant la circulation du collecteur de fluide chaud vers le collecteur de fluide froid, lesdits micro-canaux (3) étant agencés en rangées reliées entre elles par un ensemble d'ailettes (4) ;
- un conduit aéraulique ou plénum d'alimentation en air ambiant (5) situé derrière l'échangeur de chaleur, formant une cavité arrangée de manière à assurer un flux d'air de bas en haut le plus uniforme possible en sortie de l'échangeur de chaleur ;
- au moins un ventilateur (6) localisé à la base du ventilo-convecteur (1) sous le plénum d'alimentation en air ambiant (5) ;
**caractérisé en ce que** le ventilo-convecteur comprend une pluralité de ventilateurs axiaux (6) répartis à la même hauteur sur toute la largeur (11) du ventilo-convecteur, afin de permettre la circulation de l'air ambiant dans le plénum (5) et ensuite à travers l'échangeur de chaleur (2) vers l'extérieur, par la partie frontale du ventilo-convecteur (1) et **en ce que** le plénum d'alimentation en air ambiant (5) possède une section (5') qui va en se rétrécissant de manière linéaire depuis sa partie proximale des ventilateurs (6) vers sa partie distale des ventilateurs (6), ainsi qu'une largeur constante.

2. Ventilo-convecteur selon la revendication 1, **caractérisé en ce que** le rapport de ladite section proximale à ladite section distale est compris entre 1,3 et 3.

3. Ventilo-convecteur selon la revendication 1, **caractérisé en ce que** le nombre de ventilateurs (6) est compris entre 7 et 11.

4. Ventilo-convecteur selon la revendication 1, **caractérisé en ce que** le plénum (5) comporte une chicane (8) entre les ventilateurs (6) et la section (5') qui va en se rétrécissant, configurée pour que le rapport entre la section d'entrée (14) et la section de sortie (15) de la chicane (8) soit compris entre 0,35 et 0,45.

5. Ventilo-convecteur selon la revendication 1, **caractérisé en ce que** les micro-canaux (3) de l'échangeur de chaleur (2) sont disposés en tubes parallèles aplatis reliés entre eux par les ailettes (4).

6. Ventilo-convecteur selon la revendication 5, **caractérisé en ce que** le nombre de micro-canaux (3) par tube est compris entre 2 et 15 et la largeur des tubes de micro-canaux (3) est comprise entre 15 et 50 mm.

7. Ventilo-convecteur selon la revendication 5, **caractérisé en ce que** les ailettes (4) sont sous la forme d'une tôle continue et ondulée, disposée de manière à permettre le passage frontal de l'air dans l'échangeur de chaleur.

8. Ventilo-convecteur selon la revendication 7, **caractérisé en ce que** les ailettes (4) sont des ailettes à persiennes, perforées, à bandes décalées, rectangulaires, triangulaires, droites ou ondulées.

9. Ventilo-convecteur selon l'une des quelconques revendications précédentes, **caractérisé en ce que** le fluide caloporteur est de l'eau ou une solution aqueuse.

10. Ventilo-convecteur selon l'une des quelconques revendications précédentes, **caractérisé en ce qu'**il comprend une plaque de parachèvement (9) située contre la face avant de l'échangeur de chaleur et perforée pour permettre le passage de l'air sortant.

11. Ventilo-convecteur selon l'une des quelconques revendications précédentes, **caractérisé en ce qu'**il comprend une électronique de mesure et contrôle (7), pour communiquer par internet les données de production à un utilisateur.

## Patentansprüche

1. Gebläsekonvektor (1), umfassend:
- einen Eingang und einen Ausgang von Wärmeträgerfluid;
- einen im Wesentlichen vertikal angeordneten Wärmetauscher (2), der mit dem Eingang und dem Ausgang von Wärmeträgerfluid verbunden ist, dessen größte Fläche Breite (11) x Höhe (12) dem Frontteil des Gebläsekonvektors (1) entspricht, wobei der Wärmetauscher einen Sammler von warmem Fluid, einen Sammler von kaltem Fluid und eine Vielzahl von Mikrokanälen (3) umfasst, die zwischen den Sammlern lokalisiert sind und die Zirkulation vom Sammler von warmem Fluid zum Sammler von kaltem Fluid gestatten, wobei die Mikrokanäle (3) in Reihen eingerichtet sind, die miteinander durch eine Flügelanordnung (4) verbunden sind;
- einen Lüftungskanal oder Plenum zur Versorgung mit Umgebungsluft (5), der sich hinter dem Wärmetauscher befindet, einen Hohlraum bildend, der derart eingerichtet ist, dass ein Luftstrom von unten nach oben so gleichmäßig wie möglich am Ausgang des Wärmetauschers gesichert ist;
- mindestens einen Lüfter (6), der an der Basis des Gebläsekonvektors (1) unter dem Plenum zur Versorgung mit Umgebungsluft (5) lokalisiert ist;
**dadurch gekennzeichnet, dass** der Gebläsekonvektor eine Vielzahl axialer Lüfter (6) umfasst, die in derselben Höhe über die gesamte Breite (11) des Gebläsekonvektors verteilt sind, um die Zirkulation der Umgebungsluft im Plenum (5) und dann durch den Wärmetauscher (2) durch den Frontteil des Gebläsekonvektors (1) nach außen zu gestatten, und dass das Plenum zur Versorgung mit Umgebungsluft (5) einen Querschnitt (5') besitzt, der sich linear ab seinem proximalen Teil der Lüfter (6) zu seinem distalen Teil der Lüfter (6) verengt, sowie eine konstante Breite.

2. Gebläsekonvektor nach Anspruch 1, **dadurch gekennzeichnet, dass** das Verhältnis des proximalen Querschnitts zum distalen Querschnitt zwischen 1,3 und 3 liegt.

3. Gebläsekonvektor nach Anspruch 1, **dadurch gekennzeichnet, dass** die Anzahl der Lüfter (6) zwischen 7 und 11 liegt.

4. Gebläsekonvektor nach Anspruch 1, **dadurch gekennzeichnet, dass** das Plenum (5) ein sich zwischen den Lüftern (6) und dem Querschnitt (5') verengendes Leitblech (8) aufweist, das ausgelegt ist, damit das Verhältnis zwischen dem Eingangsquerschnitt (14) und dem Ausgangsquerschnitt (15) des Leitblechs (8) zwischen 0,35 und 0,45 liegt.

5. Gebläsekonvektor nach Anspruch 1, **dadurch gekennzeichnet, dass** die Mikrokanäle (3) des Wärmetauschers (2) in abgeflachten parallelen Röhren angeordnet sind, die durch Flügel (4) miteinander verbunden sind.

6. Gebläsekonvektor nach Anspruch 5, **dadurch gekennzeichnet, dass** die Anzahl der Mikrokanäle (3) je Röhre zwischen 2 und 15 liegt und die Breite der Röhren der Mikrokanäle (3) zwischen 15 und 50 mm beträgt.

7. Gebläsekonvektor nach Anspruch 5, **dadurch gekennzeichnet, dass** die Flügel (4) in Form eines kontinuierlichen gewellten Blechs vorliegen, das derart angeordnet ist, dass der frontale Durchgang von Luft in den Wärmetauscher gestattet ist.

8. Gebläsekonvektor nach Anspruch 7, **dadurch gekennzeichnet, dass** die Flügel (4) Flügel mit Luftschlitzen, perforierte, mit versetzten Bändern, rechteckige, dreieckige, gerade oder gewellte sind.

9. Gebläsekonvektor nach einem der vorangehenden Ansprüche, **dadurch gekennzeichnet, dass** das Wärmeträgerfluid Wasser oder eine wässrige Lösung ist.

10. Gebläsekonvektor nach einem der vorangehenden Ansprüche, **dadurch gekennzeichnet, dass** er eine Abschlussplatte (9) umfasst, die sich an der Vorderseite des Wärmetauschers befindet und perforiert ist, um den Durchgang der austretenden Luft zu gestatten.

11. Gebläsekonvektor nach einem der vorangehenden Ansprüche, **dadurch gekennzeichnet, dass** er eine Kontroll- und Messelektronik (7) umfasst, um über das Internet die Produktionsdaten an einen Benutzer zu kommunizieren.

## Claims

1. A fan coil (1) comprising:
- an inlet and an outlet for heat-transfer fluid;
- a heat exchanger (2) positioned essentially vertically in use, connected to the heat-transfer fluid inlet and outlet, the largest surface width (11) x height (12) of which corresponds to the front part of the fan coil (1), said heat exchanger comprising a hot-fluid collector, a cold-fluid collector and a plurality of micro-channels (3) that are located between said collectors and allow the circulation from the hot-fluid collector to the cold-fluid collector, said micro-channels (3) being arranged in rows connected to one another by a set of fins (4);
- an air duct or plenum (5) supplying ambient air located behind the heat exchanger, forming a cavity arranged so as to ensure an air flow from bottom to top which is as uniform as possible at the outlet of the heat exchanger;
- at least one fan (6) located at the base of the fan coil (1) under the plenum (5) supplying ambient air;
**characterized in that** the fan coil comprises a plurality of axial fans (6) distributed at the same height over the entire width (11) of the fan coil, so as to allow the circulation of ambient air in the plenum (5) and next through the heat exchanger (2) toward the outside, through the front part of the fan coil (1), and **in that** the plenum (5) supplying ambient air has a cross-section (5') which linearly narrows from its part that is proximal to the fans (6) toward its part that is distal to the fans (6), as well as a constant width.

2. The fan coil according to Claim 1, **characterized in that** the ratio of said proximal section to said distal section is between 1.3 and 3.

3. The fan coil according to Claim 1, **characterized in that** the number of fans (6) is between 7 and 11.

4. The fan coil according to Claim 1, **characterized in that** the plenum (5) comprises a baffle (8) between the fans (6) and the narrowing cross-section (5'), configured so that the ratio between the inlet cross-section (14) and the outlet cross-section (15) of the baffle (8) is between 0.35 and 0.45.

5. The fan coil according to Claim 1, **characterized in that** the micro-channels (3) of the heat exchanger (2) are positioned in flat, parallel tubes connected to one another by the fins (4).

6. The fan coil according to Claim 5, **characterized in that** the number of micro-channels (3) per tube is between 2 and 15 and the width of the microchannel tubes (3) is between 15 and 50 mm.

7. The fan coil according to Claim 5, **characterized in that** the fins (4) are in the form of a continuous and corrugated sheet, positioned so as to allow the frontal passage of air in the heat exchanger.

8. The fan coil according to Claim 7, **characterized in that** the fins (4) are louvered or perforated fins, fins with offset strips, or rectangular, triangular, straight or corrugated fins.

9. The fan coil according to any one of the preceding claims, **characterized in that** the heat-transfer fluid is water or an aqueous solution.

10. The fan coil according to any one of the preceding claims, **characterized in that** it comprises a finishing plate (9) located against the front face of the heat exchanger and perforated to allow the passage of outgoing air.

11. The fan coil according to any one of the preceding claims, **characterized in that** it comprises measuring and control electronics (7), in order to communicate the production data to a user using the Internet.
